# EUROPEAN PATENT APPLICATION

(11) **EP 4 312 075 A1**
(43) Date of publication of application: **31.01.2024**
(21) Application number: 23186821.7
(22) Date of filing: 20.07.2023
(51) Int. Cl.: G02B 27/01, G06T 19/00, G06V 20/20, G06T 13/00

(54) **AUGMENTED REALITY DEVICE TO INDICATE A PLAN FOR TOOL USAGE**

(30) Priority: 27.07.2022 US 202263392651 P
(71) Applicant: Techtronic Cordless GP, Anderson, SC 29621 (US)
(72) Inventor: CHOI, Man Ho, Kwai Chung (CN); NG, Ho Lam, Kwai Chung (CN); LI, Shing Hin, Kwai Chung (CN)
(74) Representative: Zimmermann & Partner Patentanwälte mbB

(57) **Abstract**

An augmented reality device may include a camera configured to capture image data. The augmented reality device may also include a projector, and an electronic processor coupled to the camera and to the projector. The electronic processor may be configured to identify a power tool to be used by a user of the augmented reality device. The electronic processor may be further configured to identify, based on the image data captured by the camera, a work piece on which an operation of the power tool is intended to be performed. The electronic processor may be further configured to control the projector to project an indication that indicates a location on the work piece at which the operation of the power tool is intended to be performed.

## Description

### RELATED APPLICATIONS

This application claims priority to U.S. Provisional Application No. 63/392,651, filed on July 27, 2022 (Attorney Docket No.: 206737-9060-US01), the entire contents of which are hereby incorporated by reference.

### FIELD

Embodiments described herein relate to using an augmented reality device (e.g., a head-mounted device) to indicate a plan for tool usage.

### SUMMARY

One embodiment includes an augmented reality device that may include a camera configured to capture image data. The augmented reality device may also include a projector, and an electronic processor coupled to the camera and to the projector. The electronic processor may be configured to identify a power tool to be used by a user of the augmented reality device. The electronic processor may be further configured to identify, based on the image data captured by the camera, a work piece on which an operation of the power tool is intended to be performed. The electronic processor may be further configured to control the projector to project an indication that indicates a location on the work piece at which the operation of the power tool is intended to be performed.

In addition to any combination of features described above, the electronic processor may be configured to identify the power tool based on the image data captured by the camera.

In addition to any combination of features described above, the electronic processor may be configured to identify the power tool based on the image data by at least one selected from the group consisting of (i) using image analytics to perform object recognition on the image data, (ii) recognizing a barcode on the power tool included in the image data, and both (i) and (ii).

In addition to any combination of features described above, the augmented reality device may include a network interface configured to communicate with the power tool, an external device, or both. The electronic processor may be configured to identify the power tool by receiving a wireless signal from the power tool.

In addition to any combination of features described above, the augmented reality device may include a network interface configured to communicate with the power tool, an external device, or both. The electronic processor may configured to wirelessly receive, via the network interface, operation planning information from the external device. The operation planning information may indicate a type of the power tool, the operation of the power tool that is intended to be performed, a type of the work piece, and the location on the work piece at which the operation of the power tool is intended to be performed. The electronic processor may be configured to store the operation planning information in a memory of the augmented reality device, and identify the work piece and the location on the work piece based on the image data captured by the camera and based on the operation planning information.

In addition to any combination of features described above, the electronic processor may be configured to control the projector to project the indication onto at least one selected from the group consisting of the work piece, a lens of the augmented reality device, an eye of the user, and combinations thereof.

In addition to any combination of features described above, the indication may include power tool setting information that indicates a setting in which the power tool should operate to perform the operation that the power tool is intended to perform.

In addition to any combination of features described above, the indication may include work progress information that indicates a point in time in which the user should stop the operation of the power tool.

In addition to any combination of features described above, the operation that the power tool is intended to perform may include at least one selected from the group consisting of cutting the work piece, drilling into the work piece, sanding the work piece, securing an object to the work piece, and combinations thereof.

In addition to any combination of features described above, the augmented reality device may include a network interface configured to communicate with the power tool, an external device, or both. The electronic processor may be further configured to display a second indication of a planned location of the work piece relative to a real-world object. The planned location of the work piece may be wirelessly received from the external device via the network interface. The planned location of the work piece may be selected by the user via a user input on the external device and displayed on a display of the external device in a virtual reality environment.

Another embodiment includes a method of controlling an augmented reality device. The method may include identifying, with an electronic processor of the augmented reality device, a power tool to be used by a user of the augmented reality device. The method may further include identifying, with the electronic processor and based on image data captured by a camera of the augmented reality device, a work piece on which an operation of the power tool is intended to be performed. The method may further include controlling, with the electronic processor, a projector of the augmented reality device to project an indication that indicates a location on the work piece at which the operation of the power tool is intended to be performed.

In addition to any combination of features described above, identifying the power tool may include identifying the power tool based on the image data by at least one selected from the group consisting of (i) using image analytics to perform object recognition on the image data, (ii) recognizing a barcode on the power tool included in the image data, and both (i) and (ii).

In addition to any combination of features described above, the method may include wirelessly receiving, via a network interface of the augmented reality device, operation planning information from an external device. The operation planning information may indicate a type of the power tool, the operation of the power tool that is intended to be performed, a type of the work piece, and the location on the work piece at which the operation of the power tool is intended to be performed. The method may include storing, with the electronic processor, the operation planning information in a memory of the augmented reality device. The method may include identifying, with the electronic processor, the work piece and the location on the work piece based on the image data captured by the camera and based on the operation planning information.

In addition to any combination of features described above, the indication may include power tool setting information that indicates a setting in which the power tool should operate to perform the operation that the power tool is intended to perform.

In addition to any combination of features described above, the indication may include work progress information that indicates a point in time in which the user should stop the operation of the power tool.

In addition to any combination of features described above, the method may include displaying, with the projector, a second indication of a planned location of the work piece relative to a real-world object. The planned location of the work piece may be wirelessly received from an external device via a network interface of the augmented reality device. The planned location of the work piece may be selected by the user via a user input on the external device and displayed on a display of the external device in a virtual reality environment.

Another embodiment includes a communication system that may include an external device and an augmented reality device. The external device may include a first electronic processor, a first network interface, and a display. The first electronic processor may be configured to receive a user input to establish operation planning information for an operation to be performed on a first type of work piece using a first type of power tool. The first electronic processor may be further configured to display the operation planning information on the display. The first electronic processor may be further configured to transmit, via the first network interface, the operation planning information to an augmented reality device. The augmented reality device may include a second network interface, a camera configured to capture image data, and a projector. The augmented reality device may further include a second electronic processor coupled to the second network interface, to the camera, and to the projector. The second electronic processor may be configured to receive, via the second network interface, the operation planning information from the external device. The second electronic processor may be further configured to identify, based on the first type of power tool included in the operation planning information, a first power tool to be used by a user of the augmented reality device. The second electronic processor may be further configured to identify, based on the image data captured by the camera and based on the operation planning information, a first work piece on which the operation of the first power tool is to be performed. The second electronic processor may be further configured to control the projector to project an indication that indicates a location on the first work piece at which the operation of the first power tool is to be performed.

In addition to any combination of features described above, the indication may include power tool setting information that indicates a setting in which the first power tool should operate to perform the operation that the first power tool is intended to perform.

In addition to any combination of features described above, the second electronic processor may be configured to wirelessly communicate power tool setting information to the first power tool in response to identifying the first power tool, the first work piece, and the location on the first work piece at which the operation of the first power tool is to be performed.

In addition to any combination of features described above, the indication may include work progress information of the operation that the first power tool is intended to perform. The second electronic processor may be configured to determine that the work operation has been completed using image analytics of the image data captured by the camera, and transmit, via the second network interface, a command to the first power tool to stop operating in response to determining that the work operation has been completed.

Other aspects, features, and embodiments will become apparent by consideration of the detailed description and accompanying drawings.

### BRIEF DESCRIPTION OF THE DRAWINGS

FIG. 1 illustrates a communication system including an augmented reality device according to some example embodiments.
FIG. 2 illustrates the augmented reality device of the communication system of FIG. 1 according to some example embodiments.
FIG. 3 is a block diagram of the augmented reality device of FIG. 2 according to some example embodiments.
FIG. 4 is a block diagram of an external device of the communication system of FIG. 1 according to some example embodiments.
FIG. 5 illustrates a flowchart of a method that may be performed by the external device of FIG. 4 to display operation planning information (i.e., a work plan) according to some example embodiments.
FIG. 6 illustrates a flowchart of a method that may be performed by the augmented reality device of FIG. 2 to display a work plan in an augmented reality environment according to some example embodiments.
FIG. 7 illustrates an example field of view of a user while wearing a head-mounted display acting as the augmented reality device of FIG. 2 according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

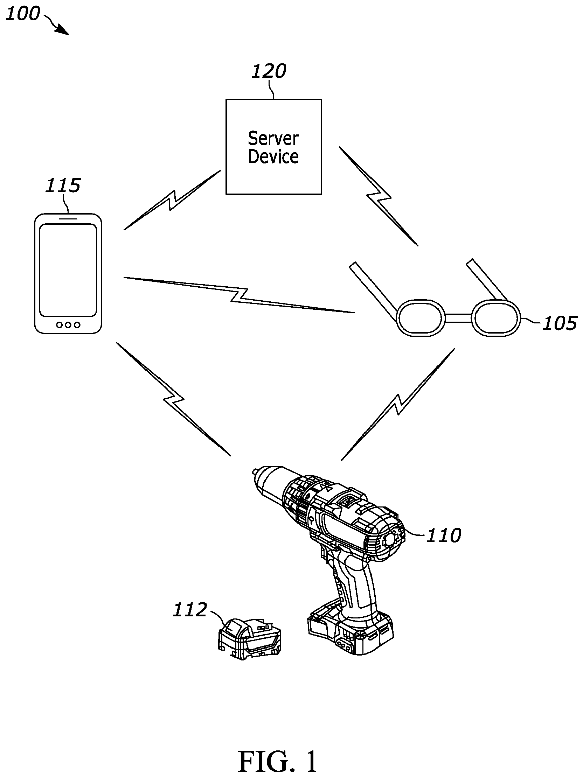

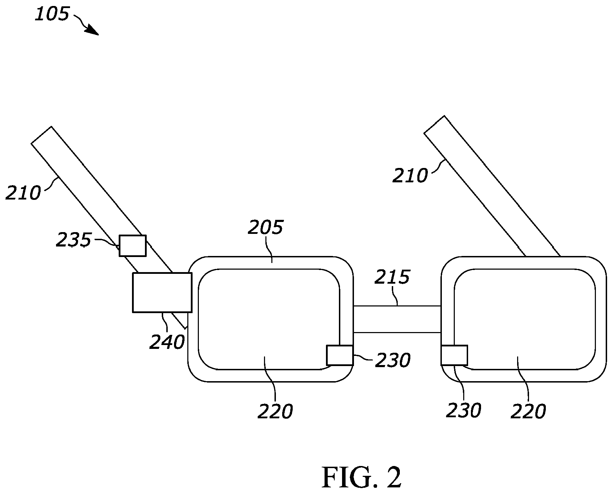

FIG. 1 illustrates a communication system 100 that may include an augmented reality device 105, a power tool 110, a battery pack 112 configured to connect to the power tool 110 to provide power to the power tool 110, an external device 115, and a server device 120 according to some example embodiments. The augmented reality device 105 is primarily described as being a head-mounted display (e.g., see FIG. 2 and corresponding explanation below). However, in other embodiments, the augmented reality device 105 may be a different kind of device that augments visual observations of a user (e.g., a separate display projector that is not mounted to a head of the user).

The power tool 110 is shown as a power drill 110 in FIG. 1 as an example. In some embodiments, the power tool 110 may be a hand-held power tool 110 or any other type of power tool 110. The power tool 110 may also be referred to as a power tool device 110. The power tool device 110 may be configured to perform one or more specific tasks (e.g., drilling, cutting, fastening, pressing, lubricant application, sanding, heating, grinding, bending, forming, impacting, polishing, lighting, etc.). For example, the power drill 110 is associated with the task of generating a rotational output (e.g., to drive a bit), while a reciprocating saw is associated with the task of generating a reciprocating output motion (e.g., for pushing and pulling a saw blade). The task(s) associated with a particular tool may also be referred to as the primary function(s) of the tool.

Although the power tool device 110 illustrated in FIG. 1 is a power drill 110, embodiments explained herein similarly apply to and can be used in conjunction with a variety of power tool devices 110 including power tools and/or accessories. For instance, the power tool device 110 may be another power tool, test and measurement equipment, a vacuum cleaner, a worksite radio, outdoor power equipment, a vehicle, or another device. Power tools can include drills, circular saws, jig saws, band saws, reciprocating saws, screw drivers, angle grinders, straight grinders, hammers, multi-tools, impact wrenches, rotary hammers, impact drivers, angle drills, pipe cutters, grease guns, hydraulic cutters, hydraulic crimpers, magnetic drills, and the like. Test and measurement equipment can include digital multimeters, clamp meters, fork meters, wall scanners, infrared (IR) thermometers, laser distance meters, laser levels, remote displays, insulation testers, moisture meters, thermal imagers, inspection cameras, and the like. Vacuum cleaners can include stick vacuums, hand vacuums, upright vacuums, carpet cleaners, hard surface cleaners, canister vacuums, broom vacuums, and the like. Outdoor power equipment can include blowers, chain saws, edgers, hedge trimmers, lawn mowers, trimmers, and the like. Other devices can include cameras, motion sensing alarms, flashlights, work lights (e.g., free-standing work lights), weather information display devices, a portable power source, a digital camera, a digital music player, a radio, and multi-purpose cutters. In some embodiments, the power tool device 110 may be non-motorized as indicated by a number of the above examples.

As indicated in FIG. 1, in some embodiments, the augmented reality device 105 is configured to bidirectionally wirelessly communicate with the external device 115, the power tool 110, and/or the server device 120. In some embodiments, the augmented reality device 105 is configured to directly communicate with the external device 115 when the augmented reality device 105 is within communication range of the external device 115 (e.g., via Bluetooth^{™}, WiFi^{™}, or the like). In some embodiments, the augmented reality device 105 is additionally or alternatively configured to communicate with the external device 115 via an intermediary device such as a cellular communication tower/base station, another device in a cellular network, or the like (e.g., when the augmented reality device 105 is outside of direct communication range with the external device 115). In some embodiments, the augmented reality device 105 is configured to communicate similarly with the power tool 110 and/or the server device 120. The external device 115 may also be configured to communicate similarly with the power tool 110 and/or the server device 120.

The external device 115 may be, for example, a smart phone (as illustrated), a laptop computer, a desktop computer, a tablet computer, a personal digital assistant (PDA), a wireless communication router that allows another external device 115 that is located remotely from the augmented reality device 105 to communicate with the augmented reality device 105, or another electronic device capable of communicating with the augmented reality device 105. The server device 120 may be, for example, a cloud computing repository, a database, a blockchain network, or any other type of network capable of receiving, transmitting, and storing data. In some embodiments, the server device 120 stores data associated with a virtual reality environment. When such data is provided to one or more external devices 115 and/or augmented reality devices 105, the external devices 115 and/or the augmented reality devices 105 may display information such that a virtual reality world/environment is viewable by a user of each respective external device 115 and/or augmented reality device 105. In some instances, the virtual reality environment may be based on (e.g., may mimic) properties and/or items in the real world as explained in greater detail below.

Also as described in greater detail below, in some embodiments, the external device 115 and/or the augmented reality device 105 are configured to generate a three-dimensional graphical representation of a work plan, such as a location on a work piece where a power tool operation is to be performed, a planned location and orientation of a workpiece with respect to a real-world object, and/or the like. The external device 115 may also be configured to communicate with the power tool 110 to enable or disable certain features/operations of the power tool 110 in accordance with instructions received via a user input (e.g., available modes of operation of the power tool 110). The external device 115 may also be configured to transmit work plan information entered via user input on the external device 115 to the server device 120.

In some embodiments, the communication between the external device 115 and the augmented reality device 105 may be wired (e.g., via a Universal Serial Bus (USB) cord configured to connect to respective USB ports of the external device 115 and the augmented reality device 105). In fact, communication between any of the devices shown in FIG. 1 may be over a wireless interface and/or over a wired interface.

While FIG. 1 illustrates one augmented reality device 105, one power tool 110 (and one battery pack 112), one external device 115, and one server device 120, in some embodiments, the communication system 100 includes additional augmented reality devices 105, power tools 110 (and battery packs 112), external devices 115, and/or server devices 120. In some embodiments, a single external device 115 may be configured to communicate with multiple augmented reality devices 105 and/or power tools 110. In some embodiments, a single augmented reality device 105 may be configured to communicate with multiple power tools 110. In some embodiments, external devices 115 of different users may be configured to display a representation of the same virtual reality world/environment (e.g., the same work plan for a certain real-world task and object) using data received from the server device 120.

FIG. 2 illustrates the augmented reality device 105 as a head-mounted display according to some example embodiments. As noted above, in other embodiments, the augmented reality device 105 is not a head-mounted display. In the example illustrated, the augmented reality device 105 includes a frame 205 that includes earpieces 210 and a nosepiece 215. A lens system 220 is secured within the frame 205. In some embodiments, the augmented reality device 105 includes fewer or additional components in configurations different from that illustrated in FIG. 2. For example, although FIG. 2 illustrates two lenses, in some embodiments, the lens system 220 includes more or less lenses. Furthermore, the lens system 220 may be any other existing lens system or later-developed lens system. In some instances, the frame 205 may not have the nosepiece 215 in some embodiments. Further, in some embodiments, the frame 205 may not be present at all. The augmented reality device 105 may be worn by a user such that the eyes of the user are able to look through the lens system 220.

In some instances, the augmented reality device 105 includes one or more cameras 230 (e.g., one or more eye tracking cameras 230, one or more environment monitoring cameras 230, etc.), a first electronic processor 235, and a display projector 240 (i.e., projector 240). In some embodiments, the augmented reality device 105 may also include one or more infrared projectors (not shown). The infrared projector may project infrared light at the eyes of a user which allows an eye tracking camera 230 to track a direction of the user's eyes (that is, tracking where the user is directing their gaze). In some embodiments, for example, the infrared projector is coaxial with an optical path of the eyes (e.g., bright pupil eye tracking). In other embodiments, the infrared projector is offset with the optical path of the eyes (e.g., dark pupil eye tracking). In some embodiments, the eye tracking camera 230 may be configured to track the direction and/or a focal length of the user's eyes without an infrared projector being present using, for example, corneal reflections of visible light. The eye tracking camera 230 may use one of many eye tracking methods known to those skilled in the art as well as later-developed eye tracking methods.

The eye tracking camera 230 is configured to communicate, to the first electronic processor 235, data relating to the direction of the user's eyes. The first electronic processor 235 uses that data to determine the location in a field of vision where the eyes are looking and a distance at which the eyes of the user are focused (that is, focal distance).

In some embodiments, an environment monitoring camera 230 monitors an environment in which the user is looking and generally faces in an opposite direction as the eye tracking camera 230. For example, the environment monitoring camera 230 may captures image data of a field of view of the user and may transmit the image data to the first electronic processor 235 for processing. For example, the first electronic processor 235 may be configured to identify objects included in the image data by at least one selected from the group of (i) using image analytics to perform object recognition on the image data, (ii) recognizing a barcode on an object (e.g., the power tool 110) included in the image data, and both (i) and (ii). In some instances, image analytics of image data may include video analytics of video data that may be a series of captured images.

In some embodiments, the first electronic processor 235 controls the display projector 240 to display an image/indication onto at least one selected from the group of a work piece, a lens of lens system 220, an eye of the user, and combinations thereof. The display of an image/indication by the display projector 240 may augment the user's perception/reality to make it appear that markings, text, highlighting of an edge, or the like is present on or nearby one or more real-world objects within the user's field of view. In other words, the display projector 240 provides an augmented reality to the user.

This description of the display projector 240 is merely an example. Images/indications may additionally or alternatively be displayed in other manners. For example, the lens system 220 itself may be capable of displaying images to augment the user's reality. In some embodiments, a flexible organic light-emitting diode (OLED) display may be used to display images. Images displayed with the display projector 240 and the lens system 220 may be displayed at a predetermined location within a field of vision of the user such that an indication and/or a virtual object appears to be in a certain location at a certain focal distance within the user's field of view. In some embodiments, the augmented reality device 105 includes more than one display projector 240 (for example, each lens of the lens system 220 may have a separate display projector 240). The display projector 240 may display images in various ways that are perceivable to the eyes of the user (e.g., text, icons, photos, etc.).

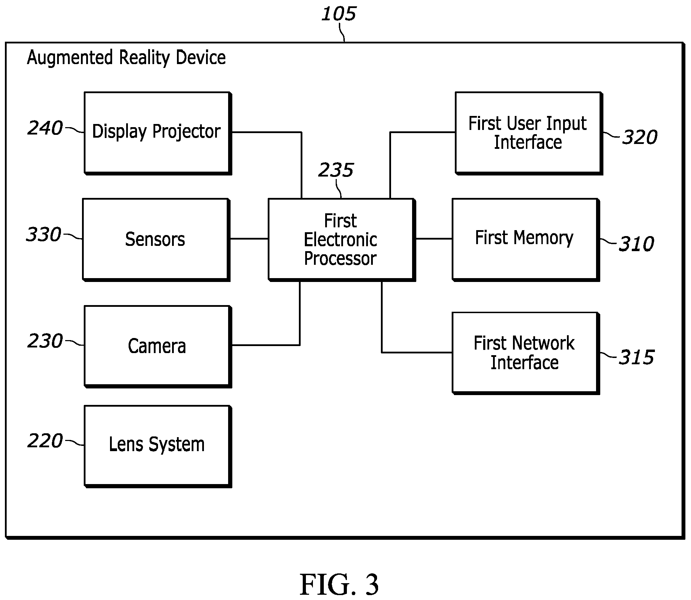

FIG. 3 is a block diagram of the augmented reality device 105 according to some example embodiments. In the embodiment illustrated, the augmented reality device 105 includes the first electronic processor 235 (for example, a microprocessor or other electronic device). The first electronic processor 235 includes input and output interfaces (not shown) and is electrically coupled to a first memory 310, a first network interface 315, an optional first user input device 320, optional one or more sensors 330, the one or more cameras 230, and the display projector 240. FIG. 3 also shows the lens system 220 separate from the components of the augmented reality device 105, for example, in an embodiment, where the display projector 240 projects images onto the lens system 220. In alternate embodiments where the lens system 220 displays its own images as explained previously herein, the lens system 220 may be coupled to the first electronic processor 235 to allow the first electronic processor 235 to control how the lens system 220 displays information. In some embodiments, the augmented reality device 105 includes fewer or additional components in configurations different from that illustrated in FIG. 3. For example, the augmented reality device 105 may not include the first user input device 320 and/or the first sensors 330. As another example, even though FIG. 3 does not show a battery, the augmented reality device 105 may include a battery to provide power to one or more components of the augmented reality device 105. As another example, the augmented reality device 105 may include a location determination component (e.g., a global positioning system (GPS) receiver) to allow the first electronic processor 235 to determine a location of the augmented reality device 105. In some embodiments, the augmented reality device 105 performs functionality other than the functionality described below.

The first memory 310 may include read only memory (ROM), random access memory (RAM), other non-transitory computer-readable media, or a combination thereof. The first electronic processor 235 is configured to receive instructions and data from the first memory 310 and execute, among other things, the instructions. In particular, the first electronic processor 235 executes instructions stored in the first memory 310 to perform the methods described herein.

The first network interface 315 is configured to send data to and receive data from other devices in the communication system 100 (e.g., the power tool 110, the external device 115, the server device 120, etc.). In some embodiments, the first network interface 315 includes one or more transceivers for wirelessly communicating with the external device 115 and/or the power tool 110 (e.g., a first radio frequency (RF) transceiver configured to communicate via Bluetooth^{™}, WiFi^{™}, or the like). The first network interface 315 may include an additional transceiver for wirelessly communicating with the server device 120 (and/or the external device 115 and/or the power tool 110) via, for example, cellular communication. In some embodiments, at least some of the transceivers and/or receivers of the augmented reality device 105 may be combined or share some elements (e.g., an antenna and/or other hardware). Alternatively or additionally, the first network interface 315 may include a connector or port for receiving a wired connection to the external device 115, such as USB cable.

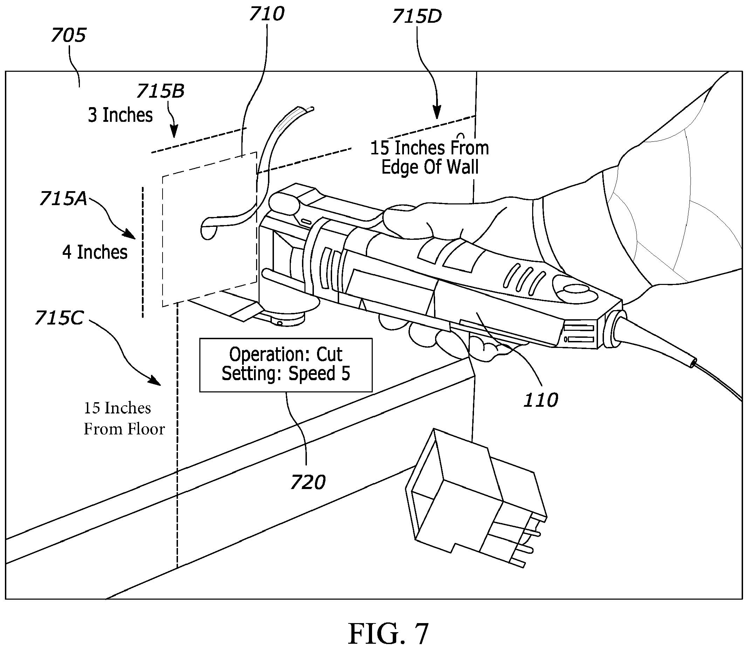

The first user input device 320 is configured to allow the first electronic processor 235 to receive a user input from a user to, for example, set/adjust an operational parameter of the augmented reality device 105 as explained in greater detail below. The first user input device 320 may include one or more buttons (not shown) on the frame 205 of the augmented reality device 105. The display projector 240 is configured to display information to a user. For example, the display projector 240 may display augmented reality images/text/annotations on the lens system 220 such that the images/text/annotations appear to be overlaid on and/or adjacent to objects in the real-world such as a work piece on which a power tool operation is to be performed (e.g., see indications 710, 715 of FIG. 7). As another example, the display projector 240 may display a notification (e.g., a textual notification, a color-coded notification, and/or the like) in a field of view of the user to indicate work progress and/or desired power tool operation settings (e.g., see indication 720 of FIG. 7). In some embodiments, the lens system 220 may include a liquid crystal display (LCD) screen, an organic light emitting display (OLED) display screen, or the like. In some embodiments, the lens system 220 and/or the display projector 240 includes future-developed display technologies.

In some embodiments, the first electronic processor 235 is in communication with a plurality of sensors 330 that may include electromagnetic field sensors, radio frequency sensors (e.g., radio frequency identification (RFID) interrogators/sensors), Hall sensors, current sensors, other magnetic sensors, humidity sensors, light sensors, other environmental sensors, and/or the like.

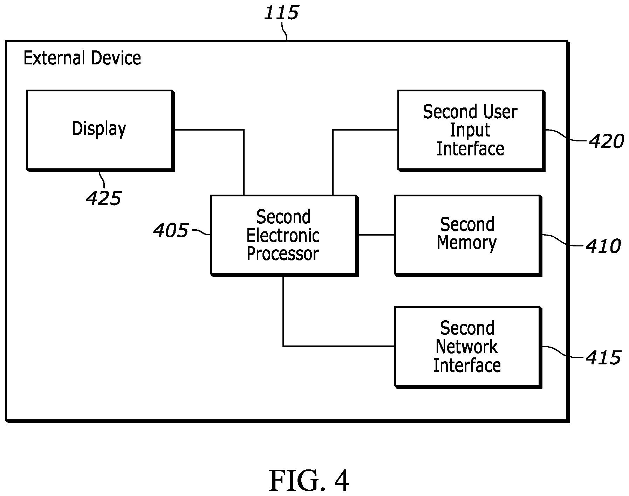

FIG. 4 is a block diagram of the external device 115 according to some example embodiments. In the example shown, the external device 115 includes a second electronic processor 405 electrically connected to a second memory 410, a second network interface 415, a second user input device 420, and a display 425. These components are similar to the like-named components of the augmented reality device 105 explained above with respect to FIG. 3 and function in a similar manner as described above.

The display 425 may be configured to display a user interface to the user. The user interface displayed on the display 425 may allow the user to access and interact with work plan information that may be displayed in a virtual or augmented reality environment as explained in greater detail below. In some embodiments, the display 425 may also act as the first user input device 420. For example, a touch sensitive input interface may be incorporated into the display 425 to allow the user to interact with content provided on the display 425. The display 425 may be a liquid crystal display (LCD) screen, an organic light emitting display (OLED) display screen, or an E-ink display. In some embodiments, the display 425 includes future-developed display technologies.

In some embodiments, the second electronic processor 405 sends data to and receives data from the augmented reality device 105 and/or the server device 120 via the second network interface 415. In some embodiments, the second network interface 415 includes one or more transceivers for wirelessly communicating with the augmented reality device 105 and/or the power tool 110 (e.g., a second RF transceiver configured to communicate via Bluetooth^{™}, WiFi^{™}, or the like). The second network interface 415 may include an additional transceiver for wirelessly communicating with the server device 120 via, for example, cellular communication. In some embodiments, at least some of the transceivers and/or receivers of the external device 115 may be combined or share some elements (e.g., an antenna and/or other hardware).

In some embodiments, the external device 115 includes fewer or additional components in configurations different from that illustrated in FIG. 4. For example, the external device 115 may include a battery, a global positioning system (GPS) device, or the like. In some embodiments, the external device 115 performs functionality other than the functionality described below.

As explained in greater detail below, the external device 115 may be configured to generate a three-dimensional representation (i.e., a virtual reality environment) of a real-world environment (e.g., a building plan of a home on a piece of real property or the like) on the display 425. In some embodiments, the external device 115 is configured to transmit, via the second network interface 415, operation planning information corresponding to a work plan shown on the three-dimensional representation of the real-world environment to the augmented reality device 105 and/or to the server device 120 as explained in greater detail below. The external device 115 and/or the augmented reality device 105 may also be configured to communicate with the power tool 110 to provide operational settings/parameters to the power tool 110 and/or receive status/operational information from the power tool 110.

In some embodiments, the server device 120 includes at least some similar elements as the elements described above with respect to the external device 115 that function in a similar manner. For example, the server device 120 may include an electronic processor, a memory, and a network interface, among other elements.

Use of power tool devices 110 often requires precision to ensure that power tool operations are performed correctly. For example, it may be important for construction projects to determine precisely how to secure objects together, place objects at a certain location and orientation, cut objects precisely, etc. Work plans may be created using a computing device (e.g., the external device 115) to help users visualize certain aspects of a project. For example, a building plan may indicate where different work pieces (e.g., wood or metal beams) should be located and how they should be secured to other work pieces. As another example, a cut plan may indicate a location and orientation of how a work piece (e.g., a piece of wood) should be cut. However, such work plans need to be manually transferred/implemented by the user in the real-world by, for example, the user making marks on the work piece with a writing utensil or by continuing to reference the work plan while performing a work operation. This manual transferring/implementation of the work plan is tedious, time-consuming, and may result in errors. Accordingly, there is a technological problem with implementation of work plans for tool usage.

To address this technological problem, the systems, methods, and devices described herein provide an indication of a location on a work piece at which operation of a tool is intended to be performed using the augmented reality device 105. The systems, methods, and devices described herein may additionally or alternatively use the augmented reality device 105 to display a planned location of a work piece relative to a real-world object. Accordingly, a work plan intended to be implemented by the user may be displayed in a field of view of the user in an augmented reality environment before and during the user actually performing a desired tool operation on the work piece and/or placing the work piece in a desired location. The systems, methods, and devices make implementation of the work plan less tedious, less time-consuming, and reduce the likelihood of user errors in implementing the work plan.

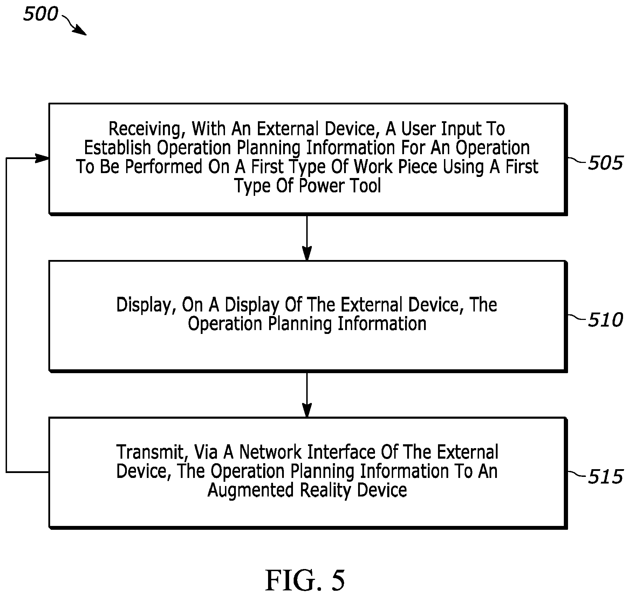

FIG. 5 illustrates a flowchart of a method 500 that may be performed by the external device 115 to display operation planning information (i.e., a work plan) according to some example embodiments. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure.

At block 505, the second electronic processor 405 of the external device 115 receives a user input to establish operation planning information (i.e., information that is part of a work plan) for an operation to be performed on a first type of work piece using a first type of power tool 110. At block 510, the second electronic processor 405 displays the operation planning information on the display 425 of the external device 115.

The operation planning information may include a building plan that may indicate a planned location of different work pieces (e.g., wood or metal beams) and how each work piece should be secured to real-world objects and/or other work pieces. The building plan may be established via user inputs by the user selecting and placing various instances of virtual work pieces within a three-dimensional representation (i.e., a virtual reality environment). For example, the display 425 may display a three-dimensional representation of a plot of real-world land on a certain scale (e.g., one hundred to one). The display 425 may also display user-selectable scaled virtual work pieces that the user can drag and drop onto the three-dimensional representation of the plot of real-world land at planned locations.

Each instance of a virtual work piece placed on the three-dimensional representation may include real-world dimensions that are related to the scale at which the three-dimensional representation is shown (e.g., one hundred to one). Accordingly, the user may place each instance of a virtual work piece in a planned location that corresponds to a real-world location on the real-world plot of land. The display 425 may indicate real-world dimensions and locations (using the scale at which the three-dimensional representation is displayed) of each instance of the virtual work piece to allow the user to establish operation planning information such as a building plan in a virtual reality environment.

For example, the user may place virtual instances of an eight foot long four-inch-by-four-inch piece of wood every four feet along a boundary of the real-world plot of land in order to plan where fence posts should be placed on the real world plot of land. Similarly, the user may place virtual metal support beams along a floor, ceiling, and/or wall of a virtual building that is displayed to mimic a structure of a real-world building. The user may also select how each instance of a virtual work piece is fastened to each other and/or to other displayed objects and/or structures. For example, two virtual pieces of wood may be fastened to each other via two screws of a particular size at a particular location through the two virtual pieces of wood.

As another example, the operation planning information may include a cut plan for one or more work pieces (e.g., pieces of wood). For example, the external device 115 may receive a user input that selects a type of work piece (e.g., a certain type of wood such as an eight foot long two-inch-by-four-inch piece of wood, a four foot long two-inch-by-four-inch piece of wood, an eight foot long four-inch-by-four-inch piece of wood, etc.). The external device 115 may also receive a user input that selects a type of operation to be performed on the selected type of work piece (e.g., cutting, drilling, etc.). In some embodiments, the selected type of operation may indicate one or more types of power tools 110 that may be used to complete the operation. For example, in response to the selected operation being cutting the work piece, the second electronic processor 405 may determine that the type of power tool 110 is a saw. In some instances, another user input may select the type of power tool 110 and/or further specify the type of power tool 110. For example, the user input may select an option associated with a reciprocating saw or a circular saw. The external device 115 may also receive a user input that selects a location and/or orientation on the work piece at which the operation of the power tool 110 is intended to be performed. For example, the user may wish to cut an eight foot long piece of wood in half or may desire to cut two feet off of the end of the piece of wood.

In some instances, respective operation planning information associated with multiple work pieces included in a larger work plan (e.g., a building plan) may make up the overall operation planning information for the building plan. For example, different work pieces within a building plan may have different operation planning information associated with the work pieces because, for example, the work pieces serve different purposes. In some embodiments, the operation planning information associated with a particular virtual work piece in a building plan may be displayed and edited by a user in response to a user input that selects the virtual work piece within the three-dimensional representation of the building/plot of land/etc.

At block 515, the external device 115 transmits, via the second network interface 415, the operation planning information (i.e., the work plan) to the augmented reality device 105. The external device 115 may also store the operation planning information in the second memory 410 and/or transmit the operation planning information to the server device 120 for storage and/or distribution to remotely located external devices 115 and/or augmented reality devices 105. As indicated by the arrow from block 515 back to block 505 in FIG. 5, in some embodiments, the method 500 may repeat to allow the user to edit the operation planning information and dynamically display the results of the edits within the three-dimensional representation of the building/plot of land/etc. on the display 425.

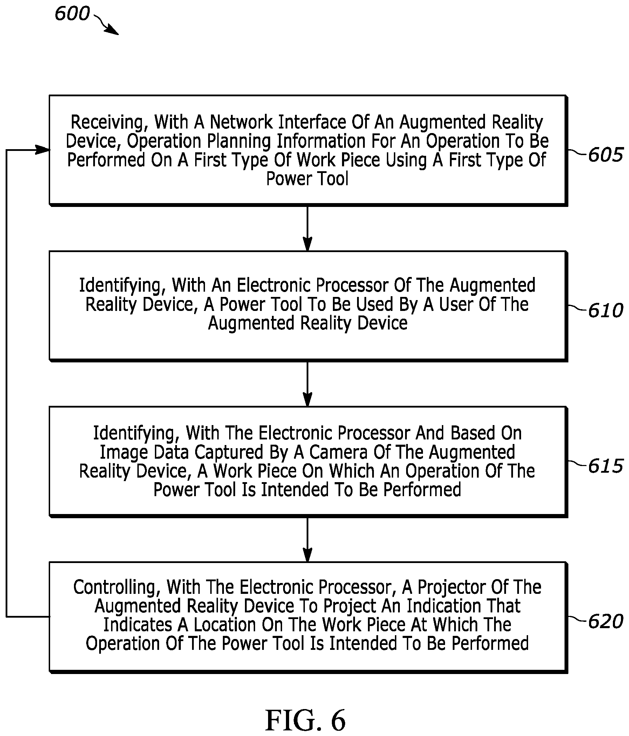

FIG. 6 illustrates a flowchart of a method 600 that may be performed by the augmented reality device 105 to display a work plan (e.g., operation planning information) in an augmented reality environment (e.g., see FIG. 7) according to some example embodiments. While a particular order of processing steps, signal receptions, and/or signal transmissions is indicated in FIG. 6 as an example, timing and ordering of such steps, receptions, and transmissions may vary where appropriate without negating the purpose and advantages of the examples set forth in detail throughout the remainder of this disclosure.

At block 605, the first electronic processor 235 of the augmented reality device 105 receives, via the first network interface 315, operation planning information for an operation to be performed on a first type of work piece using a first type of power tool 110. For example the operation planning information includes the example operation planning information explained previously herein and may be received directly via wireless communication with the external device 115. As another example, the operation planning information may be received from the server device 120 after being received at the server device 120 from another external device 115. In some embodiments, the augmented reality device 105 recites different respective operation planning information for each of a plurality of operations to be performed on work pieces included within a larger work plan (e.g., a building plan).

As indicated by the examples explained previously herein with respect to FIG. 5, in some instances, the operation planning information indicates, for each operation to be performed, a type of the power tool 110, the operation of the power tool 110 that is intended to be performed, a type of the work piece, and the location on the work piece at which the operation of the power tool 110 is intended to be performed. For example, the operation planning information may indicate that, due to a planned location of a power outlet, a hole should be cut (i.e., type of operation) by a saw (i.e., type of power tool 110) in a piece of installed drywall (i.e., the work piece) fifteen inches above a floor and fifteen inches left of an edge of the piece of installed drywall (i.e., the location on the work piece). The operation planning information may indicate the above-noted information for each of a plurality of work pieces that are involved in a construction project (e.g., for multiple pieces of wood, metal beams, etc. included in a building plan).

The operation planning information may additionally or alternatively indicate a location within a building/construction site at which each work piece is intended to be placed (i.e., a planned location of a work piece). For example, the operation planning information may indicate a planned location of a work piece relative to a real-world object such as a boundary of a plot of land, an edge of a wall, a floor and/or ceiling, and/or the like. For example, a planned location of a piece of wood to be used fence post may be five feet from a northern property line and five feet from an eastern property line. As indicated, a planned location of a work piece may be wirelessly received from the external device 115 by the augmented reality device 105. As explained previously herein with respect to FIG. 5, the planned location of the workpiece may be selected by a user via a user input on the external device 115 and displayed on a display of the external device 115 in a virtual reality environment. In some embodiments, the first electronic processor 235 is configured to store the operation planning information in the first memory 310 of the augmented reality device 105.

At block 610, the first electronic processor 235 identifies a power tool 110 to be used by a user of the augmented reality device 105. The first electronic processor 235 may determine a type of power tool 110 (e.g., a drill, a saw, a specific type of saw, etc.) and/or a specific power tool 110 (e.g., a specific power drill 110 owned by the user) to be used to perform an operation on one or more work pieces as indicated by the operation planning information received from the external device 115.

In some embodiments, identifying the power tool 110 includes determining that the power tool 110 is nearby the augmented reality device 105 such that the power tool 110 may be used by the user to performed a planned operation. In some instances, the first electronic processor 235 is configured to identify the power tool 110 based on image data captured by the camera 230 (e.g., the environment monitoring camera 230). For example, the first electronic processor 235 is configured to identify the power tool 110 based on the image data by at least one selected from the group of (i) using image analytics to perform object recognition on the image data, (ii) recognizing a barcode (e.g., a quick response (QR) code) on the power tool 110 included in the image data, and both (i) and (ii). In some instances, based on a known shape of the type of the power tool 110, the first electronic processor 235 may use image analytics of image data captured by the camera 230 to identify the power tool 110 based on its known shape. In some instances, the first electronic processor 235 may use image analytics of captured image data to determine that the power tool 110 is being held by a hand of the user. In response thereto, the first electronic processor 235 may identify the power tool 110 being held as the identified power tool 110. Additionally or alternatively, image data captured by the camera 230 may include a barcode located on the power tool 110 that corresponds to known identification information of the power tool 110 or to a type of the power tool 110 that corresponds to the operation planning information received from the external device 115. The first electronic processor 235 may identify the power tool 110 as being used (or as being planned to be used in the near future) by the user.

In some instances, the first electronic processor 235 is configured to identify the power tool 110 by receiving a wireless signal from the power tool 110. For example, the power tool 110 may be configured to periodically broadcast an identification signal that indicates identification information such as a specific identity and/or a type of the power tool 110. In response to receiving the identification signal via the first network interface 315 and/or in response to determining that the identification signal from the power tool 110 has a received signal strength indication (RSSI) above a predetermined threshold (which may indicate that the power tool 110 is nearby the augmented reality device 105), the first electronic processor 235 may identify the power tool 110 as being used by the user.

In some embodiments, in response to identifying the power tool 110, the first electronic processor 235 may determine one or more work pieces on which the identified power tool 110 or type of power tool 110 is intended to be used based on the operation planning information. In some instances, the first electronic processor 235 may determine the one or more work pieces based on the one or more work pieces being located within a predetermined distance of the augmented reality device 105. For example, when the augmented reality device 105 includes a GPS component, the first electronic processor 235 may determine a precise location of the augmented reality device 105 (which corresponds to the location of the user in many instances) within, for example, a construction/building site. Using the operation planning information, the first electronic processor 235 may determine one or more work pieces within a predetermined distance (e.g., twenty feet, forty feet, etc.) of the augmented reality device 105 on which a work operation is planned to be performed by the power tool 110 or a type of the power tool 110. The first electronic processor 235 may control the display projector 240 to display a list of such work pieces, for example, in an order prioritized by proximity to the augmented reality device 105 (e.g., a list with the nearest such work piece at the top of the list and the furthest such work piece at the bottom of the list). The user may select a desired work piece on which they intend to perform a work operation using the identified power tool 110 via a user input (e.g., by scrolling and selecting using one or more buttons included on the frame 205 of the augmented reality device 105).

At block 615, the first electronic processor 235 identifies, based on image data captured by the camera 230 (e.g., the environment monitoring camera 230), a work piece on which an operation of the power tool 110 is intended to be performed. In some instances, the first electronic processor 235 determines a specific work piece or a specific type of work piece based on the operation planning information and/or based on the user input received by one of the buttons on the augmented reality device 105. For example, the first electronic processor 235 may identify the type of work piece as a two-inch-by-four-inch piece of wood that is eight feet long or may identify the work piece as a specific two-inch-by-four-inch piece of wood (e.g., the third two-inch-by-four-inch piece of wood from a wall in a row of pieces of wood with the same dimensions).

In some instances, the first electronic processor 235 identifies the work piece within the field of view of the user based on image data capture by the camera 230. For example, the first electronic processor 235 uses image analytics to identify an object within captured image data that has the expected dimensions and/or location of the specific work piece or expected type of work piece.

In some instances, if multiple objects (i.e., possible work pieces) are identified that correspond to the expected dimensions and/or location of the specific work piece or expected type of work piece, the augmented reality device 105 may highlight the multiple objects and request a user selection of the desired work piece. For example, the first electronic processor 235 may control the display projector 240 such that the edges of the possible work pieces appear to be highlighted in a certain color to the user. The user may then select which highlighted work piece is the desired work piece, for example, by scrolling and selecting using one or more buttons on the augmented reality device 105.

In some instances, the work pieces may include a barcode similar to that described above with respect to the power tool 110. In such embodiments, the first electronic processor 235 may identify the work piece to be operated on by reading the bar code, for example, with the camera 230.

As explained above with respect to block 610, in some instances, the first electronic processor 235 may identify the work piece from a plurality of work pieces located within a predetermined distance of the augmented reality device 105. For example, when multiple work pieces are nearby the augmented reality device 105 and/or within the field of view of the user wearing the augmented reality device 105, the first electronic processor 235 may determine that a first one of the work pieces corresponds to a desired type of work piece while the other work pieces do not. Accordingly, the first electronic processor 235 may determine that the first one of the work pieces is the desired work piece associated with a respective operation of a power tool 110 intended to be performed on the work piece.

In some embodiments, the order of blocks 610 and 615 may be switched such that the work piece on which the operation of the power tool 110 is intended to be performed is identified before the identification of the power tool 110 to be used to perform the intended operation. In such implementations, similar determinations as were explained above with respect to the power tool 110 being identified first may be implemented. For example, in response to identifying the work piece, the first electronic processor 235 may determine a specific power tool 110 or power tools 110 corresponding to one or more types of power tools 110 that can be used to perform the intended operation on the identified work piece. In some instances, the first electronic processor 235 may determine the one or more power tools 110 based on the one or more power tools 110 being located within a predetermined distance of the augmented reality device 105 (e.g., based on RSSI of identification messages being received by the augmented reality device 105 from nearby power tools 110 or based on tracking information from the server device 120 that keeps track of a precise location of each of the power tools 110). In some instances, the augmented reality device 105 may indicate an approximate location of a closest power tool 110 that is configured to perform the intended operation on the identified work piece to allow the user to easily locate such a power tool 110. The first electronic processor 235 may control the display projector 240 to display a list of nearby power tools 110, for example, in an order prioritized by proximity to the augmented reality device 105 (e.g., a list with the nearest such power tool 110 at the top of the list and the furthest such power tool 110 at the bottom of the list). The user may select a desired power tool 110 that they intend to use to perform the work operation on the work piece via a user input (e.g., by scrolling and selecting using one or more buttons included on the frame 205 of the augmented reality device 105).

At block 620, the first electronic processor 235 controls the display projector 240 to project an indication that indicates a location on the work piece at which the operation of the power tool 110 is intended to be performed. In some embodiments, the first electronic processor 235 identifies the location on the work piece (and the work piece itself - at block 615) based on image data captured by the camera 230 (i.e., the environment monitoring camera 230) and based on the operation planning information.

For example, the operation planning information may include a specific location on the work piece to make a cut (e.g., two feet from the end of a piece of wood), to drill a hole, etc. By using image analytics on captured image data of the work piece, the first electronic processor 235 may determine a location on the real-world work piece that corresponds to a planned location of the operation on the work piece.

The first electronic processor 235 may then control the display projector 240 to project the indication of the location of the intended work operation onto at least one selected from the group of the work piece, a lens (e.g., lens system 220) of the augmented reality device 105, an eye of the user, and combinations thereof. For example, the indication of the location of the intended work operation may include a line, an "X," or another virtual marking that the user perceives as being located on the location where the work operation is intended to be performed (e.g., see indication 710 of FIG. 7). Accordingly, there is no need for the user to manually mark the work piece or refer back to the virtual work plan because the indication corresponds to the work plan that was previously entered on the external device 115. In some instances, the indication may include an outline corresponding to a shape of the power tool 110 that indicates how the user should orient the power tool 110 to achieve the desired work operation. For example, the outline of the shape of the power tool 110 may be displayed in a location and with a certain orientation that corresponds to the operation planning information such that the user can adjust the position of the power tool 110 to correspond to the display augmented reality outline of the power tool 110.

Additionally or alternatively to indicating the location on the work piece at which the operation of the power tool 110 is intended to be performed, the augmented reality device 105 may display a second indication of a planned location of the work piece relative to a real-world object in accordance with operation planning information. In some instances, the second indication may include an outline corresponding to a shape of the work piece and may be displayed in a location and with a certain orientation that corresponds to the operation planning information. For example, the outline of a shape of piece of wood may be displayed relative to a floor of building to guide the user when installing the piece of wood in the desired location.

In either of the above two examples that involve the display projector 240 displaying outlines of shapes of objects to guide the user during use of the power tool 110 or installation of the work piece, the first electronic processor 235 may control the outlines to change colors to indicate how close the corresponding real-world object matches to the desired orientation. For example, as the power tool 110 or the work piece is moved closer to and further from the desired location and orientation, the outline may respectively and gradually change from green to red. Additionally or alternatively, a percentage corresponding to the correct location and orientation of the power tool 110 or work piece may be displayed as the power tool 110 or work piece is moved. The closeness to the correct location and orientation may be calculated by the first electronic processor 235 using image analytics by comparing the instantaneous location and orientation of the power tool 110 or work piece to the planned location and orientation included in the operation planning information.

FIG. 7 illustrates an example field of view of the user while wearing a head-mounted display acting as the augmented reality device 105 according to some example embodiments. In other words, FIG. 7 illustrates an augmented reality environment displayed by the augmented reality device 105 within a field of view of the user. As shown in FIG. 7, indications 710 and/or 715 may be displayed within the user's field of view by the display projector 240. The indication 710 includes dashed lines in the shape of a rectangle that are displayed to appear on a location of a work piece 705 (e.g., a wall/piece of drywall 705) to indicate where the work piece 705 should be cut according to the operation planning information. Thus, the user can easily visualize where to make cuts with the power tool 110 without manually making measurements and markings or referencing a previously stored work plan on the external device 115.

Although FIG. 7 illustrates the indication 710 as an area of the work piece 705 that is intended to be cut, as explained previously herein, in other instances, the indication 710 may indicate other intended tool operations or a planned location of the work piece relative to a real-world object. For example, before cutting a hole for a power outlet, to install the drywall 705, the augmented reality device 105 may display an outline of the drywall 705 with respect to a floor and ceiling to provide an indication to the user of where the drywall 705 should be installed.

In some instances, the display projector 240 also displays one or more of indications 715A, 715B, 715C, and 715D to provide additional details of the operation planning information to the user. The indications 715A and 715B may indicate dimensions of a hole to be cut into the work piece 705. The indications 715C and 715D may indicate a location of the intended hole on the work piece 705, for example, with respect to another object such as the floor and/or with respect to the edge of the work piece 705. As shown in FIG. 7, in some instances, displayed dashed lines associated with the indication 710 may be different than displayed dashed lines associated with the indications 715 (e.g., differences in dash type, color, etc.). The difference in dashed lines may indicate to the user that the indication 710 is an indication of where to cut with the power tool 110 while the indications 715 are indications that merely provide additional information. Also as indicated in FIG. 7, one or more of the indications 710, 715 may include annotations that provide additional information such as a measurement value that indicates what each displayed dashed line represents.

In some instances, the additional information of the indications 715 are displayed to allow the user to recognize if an error was made when entering the operation planning information on the external device 115. In some instances, the indications 715 may not be displayed. For example, via a user input such as a button on the augmented reality device 105, the user may select whether the indications 715 are displayed.

In some instances, the displayed indication 710 includes power tool setting information 720 that indicates a setting in which the power tool 110 should operate to perform the operation that the power tool 110 is intended to perform based on the operation planning information. For example, FIG. 7 shows displayed power tool setting information 720 that indicates an operation intended to be performed at the indications 710 (e.g., cutting) and a power tool setting of the power tool 110 (e.g., speed 5). The power tool setting information 720 further aids the user to perform the intended operation on the work piece 705 with the intended power tool 110 at the intended power tool setting according to the operation planning information. In other instances, the power tool setting may indicate other settings besides speed. For example, the power tool setting may indicate an operational mode of a power tool 110 such as whether a drill/driver should be operated in just drill mode, just drive mode, or drill/drive mode. As another example, the power tool setting may indicate whether an impact driver should be operated in an impact mode or in a non-impact mode.

In some instances, text/annotation 720 may also indicate work progress information that indicates a point in time in which the user should stop the operation of the power tool 110. Alternatively, the work progress information may be displayed in a separate textbox/annotation. In some instances, the work progress information indicates a percentage of a planned operation (e.g., a cut depth, a drill depth, fastening depth of a fastener, etc.) that has been performed by the power tool 110. For example, using image analytics of captured image data, the first electronic processor 235 may determine a cut depth, drill depth, etc. of the power tool 110 into the work piece 705 and compare the determined depth to a planned depth included the operation planning information. The displayed work progress information may indicate a percentage of the planned depth that has been achieved so the user knows whether to continue the operation or stop the operation. For example, in response to determining that the power tool 110 has reached the planned depth, the display projector 240 may provide a notification to the user (e.g., changing colors of the work progress information to red, providing a pop-up window that indicates that the work operation is complete, and/or the like). In some instances, the work progress information is displayed in a progress bar from 0% complete to 100% complete. The progress bar may be color-coded.

In some instances, the augmented reality device 105 may communicate power tool setting information and/or operation information to the power tool 110 in response to identifying the power tool 110, the work piece 705, and the operation to be performed at a certain location on the work piece 705. For example, the augmented reality device 105 may wirelessly transmit a command to the power tool 110 to instruct the power tool 110 to operate according to a certain power tool setting (e.g., speed 5). As another example, the augmented reality device 105 may wirelessly transmit a command to the power tool 110 to stop operating (e.g., deactivate its motor) in response to determining that the work operation has been completed (e.g., in response to determining that a planned cut depth, drill depth of a hole, fastening depth of a fastener, etc. has been reached).

As indicated by the arrow from block 620 back to block 605 in FIG. 6, in some embodiments, the method 600 may repeat to be performed with respect to different intended power tool operations on different work pieces, for example, as the location and/or the field of view of the user changes and as different power tools 110 are held by the user.

As explained previously herein, the disclosed devices, systems, and methods may be used in conjunction with many different tools and operations. In some instances, the operation that the power tool 110 is intended to perform includes, but is not limited to, at least one selected from the group of cutting a work piece, drilling into a work piece, sanding a work piece, securing an object to a work piece, and combinations thereof. Additionally, although many of the examples explained herein refer to a power tool 110 that includes a motor, the disclosed devices, systems, and methods similarly apply to a non-motorized tool (e.g., a hand saw) and/or other devices.

Accordingly, various implementations of the systems and methods described herein provide, among other things, techniques for the control of augmented reality work plans used in conjunction with tools such as power tools. Other features and advantages of the invention are set forth in the following claims.

In the foregoing specification, specific examples have been described. However, one of ordinary skill in the art appreciates that various modifications and changes may be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, in this document relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus.

An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting example the term is defined to be within 10%, in another example within 5%, in another example within 1% and in another example within 0.5%. The term "coupled" as used herein is defined as connected, although not necessarily directly and not necessarily mechanically. A device or structure that is "configured" in a certain way is configured in at least that way but may also be configured in ways that are not listed.

## Claims

1. An augmented reality device comprising:
a camera configured to capture image data;
a projector; and
an electronic processor coupled to the camera and to the projector, wherein the electronic processor is configured to
identify a power tool to be used by a user of the augmented reality device,
identify, based on the image data captured by the camera, a work piece on which an operation of the power tool is intended to be performed, and
control the projector to project an indication that indicates a location on the work piece at which the operation of the power tool is intended to be performed.

2. The augmented reality device of claim 1, wherein the electronic processor is configured to identify the power tool based on the image data captured by the camera;
and optionally
wherein the electronic processor is configured to identify the power tool based on the image data by at least one selected from the group consisting of (i) using image analytics to perform object recognition on the image data, (ii) recognizing a barcode on the power tool included in the image data, and both (i) and (ii).

3. The augmented reality device of claim 1, further comprising a network interface configured to communicate with the power tool, an external device, or both;
wherein the electronic processor is configured to identify the power tool by receiving a wireless signal from the power tool.

4. The augmented reality device of claim 1, further comprising a network interface configured to communicate with the power tool, an external device, or both;
wherein the electronic processor is configured to
wirelessly receive, via the network interface, operation planning information from the external device, the operation planning information indicating a type of the power tool, the operation of the power tool that is intended to be performed, a type of the work piece, and the location on the work piece at which the operation of the power tool is intended to be performed,
store the operation planning information in a memory of the augmented reality device, and
identify the work piece and the location on the work piece based on the image data captured by the camera and based on the operation planning information.

5. The augmented reality device of claim 1, wherein the electronic processor is configured to control the projector to project the indication onto at least one selected from the group consisting of the work piece, a lens of the augmented reality device, an eye of the user, and combinations thereof.

6. The augmented reality device of claim 1, wherein the indication includes power tool setting information that indicates a setting in which the power tool should operate to perform the operation that the power tool is intended to perform;
and optionally
wherein the indication includes work progress information that indicates a point in time in which the user should stop the operation of the power tool.

7. The augmented reality device of claim 1, wherein the operation that the power tool is intended to perform includes at least one selected from the group consisting of cutting the work piece, drilling into the work piece, sanding the work piece, securing an object to the work piece, and combinations thereof.

8. The augmented reality device of claim 1, further comprising a network interface configured to communicate with the power tool, an external device, or both;
wherein the electronic processor is further configured to:
display a second indication of a planned location of the work piece relative to a real-world object,
wherein the planned location of the work piece is wirelessly received from the external device via the network interface, and
wherein the planned location of the work piece is selected by the user via a user input on the external device and displayed on a display of the external device in a virtual reality environment.

9. A method of controlling an augmented reality device, the method comprising:
identifying, with an electronic processor of the augmented reality device, a power tool to be used by a user of the augmented reality device;
identifying, with the electronic processor and based on image data captured by a camera of the augmented reality device, a work piece on which an operation of the power tool is intended to be performed; and
controlling, with the electronic processor, a projector of the augmented reality device to project an indication that indicates a location on the work piece at which the operation of the power tool is intended to be performed.

10. The method of claim 9, wherein identifying the power tool includes identifying the power tool based on the image data by at least one selected from the group consisting of (i) using image analytics to perform object recognition on the image data, (ii) recognizing a barcode on the power tool included in the image data, and both (i) and (ii).

11. The method of claim 9, further comprising:
wirelessly receiving, via a network interface of the augmented reality device, operation planning information from an external device, the operation planning information indicating a type of the power tool, the operation of the power tool that is intended to be performed, a type of the work piece, and the location on the work piece at which the operation of the power tool is intended to be performed,
storing, with the electronic processor, the operation planning information in a memory of the augmented reality device, and
identify, with the electronic processor, the work piece and the location on the work piece based on the image data captured by the camera and based on the operation planning information.

12. The method of claim 9, wherein the indication includes power tool setting information that indicates a setting in which the power tool should operate to perform the operation that the power tool is intended to perform.

13. The method of claim 9, wherein the indication includes work progress information that indicates a point in time in which the user should stop the operation of the power tool.

14. The method of claim 9, further comprising displaying, with the projector, a second indication of a planned location of the work piece relative to a real-world object;
wherein the planned location of the work piece is wirelessly received from an external device via a network interface of the augmented reality device; and
wherein the planned location of the work piece is selected by the user via a user input on the external device and displayed on a display of the external device in a virtual reality environment.

15. A communication system comprising:
an external device including a first electronic processor, a first network interface, and a display, wherein the first electronic processor is configured to
receive a user input to establish operation planning information for an operation to be performed on a first type of work piece using a first type of power tool,
display the operation planning information on the display, and
transmit, via the first network interface, the operation planning information to an augmented reality device;
the augmented reality device including
a second network interface,
a camera configured to capture image data,
a projector,
a second electronic processor coupled to the second network interface, to the camera, and to the projector, wherein the second electronic processor is configured to
receive, via the second network interface, the operation planning information from the external device,
identify, based on the first type of power tool included in the operation planning information, a first power tool to be used by a user of the augmented reality device,
identify, based on the image data captured by the camera and based on the operation planning information, a first work piece on which the operation of the first power tool is to be performed, and
control the projector to project an indication that indicates a location on the first work piece at which the operation of the first power tool is to be performed;
and optionally
wherein the indication includes power tool setting information that indicates a setting in which the first power tool should operate to perform the operation that the first power tool is intended to perform;
and optionally
wherein the second electronic processor is configured to wirelessly communicate power tool setting information to the first power tool in response to identifying the first power tool, the first work piece, and the location on the first work piece at which the operation of the first power tool is to be performed;
and optionally
wherein the indication includes work progress information of the operation that the first power tool is intended to perform; and
wherein the second electronic processor is configured to
determine that the work operation has been completed using image analytics of the image data captured by the camera, and
transmit, via the second network interface, a command to the first power tool to stop operating in response to determining that the work operation has been completed.
